# EUROPEAN PATENT SPECIFICATION

(11) **EP 3 557 220 B1**
(45) Date of publication and mention of the grant of the patent: **24.04.2024**
(21) Application number: 16924630.3
(22) Date of filing: 19.12.2016
(51) Int. Cl.: G01N 7/00, G01N 25/72, G01R 31/00, H02B 13/065, H02H 9/04

(54) **MONITORING DEVICE AND MONITORING METHOD**
ÜBERWACHUNGSVORRICHTUNG UND ÜBERWACHUNGSVERFAHREN
DISPOSITIF DE SURVEILLANCE ET PROCÉDÉ DE SURVEILLANCE

(43) Date of publication of application: 23.10.2019
(73) Proprietor: Mitsubishi Electric Corporation, Chiyoda-ku Tokyo 100-8310 (JP)
(72) Inventor: FUJII, Shigeo, Tokyo 100-8310 (JP)
(74) Representative: Witte, Weller & Partner Patentanwälte mbB
(86) International application number: PCT/JP2016/087834
(87) International publication number: WO 2018/116357

(56) References cited:
- WO-A1-2016/194649
- CN-U- 205 248 019
- JP-A- S6 277 027
- JP-A- H04 284 385
- JP-A- 2010 002 403
- JP-A- 2014 176 240
- JP-A- 2015 158 455
- JP-A- 2015 158 455

## Description

### Field

The present invention relates to a monitoring device and a monitoring method for monitoring a lightning arrester that processes a lightning stroke.

### Background

Conventionally, lightning arrestors including a plurality of nonlinear resistive elements arranged in a sealed tank in which insulating gas is encapsulated have been used. A lightning arrester protects devices connected to a system including the light arrester against overvoltage and overcurrent when a lightning stroke occurs, by discharging the overcurrent to the ground via the nonlinear resistive elements. Note that, in the description below, discharge of overcurrent to the ground in a case of a lightning stroke will also be expressed as processing a lightning stroke.

In such a lightning arrester, a nonlinear resistive element may be damaged by a lightning stroke. When a nonlinear resistive element is damaged, the device included in the system may not be protected against the next lightning stroke. Thus, a monitoring device for a lightning arrestor described in Patent Literature 1 has a configuration to detect damage of some of a plurality of nonlinear resistive elements on the basis of an increase in the temperature of the insulating gas when the lightning arrester is struck by a lightning stroke.

### Citation List

### Patent Literature

Patent Literature 1: Japanese Patent Application Laid-open No. 2015-158455
Patent Literature 2: JP S62 77027.
Patent Literature 3: JP 2014 176240.

### Summary

### Technical Problem

In the configuration described in Patent Literature 1, it is determined that some nonlinear resistive elements are damaged when it is detected that an increase in the gas pressure with an increase in the temperature of the insulating gas in the sealed tank, is dependent on a thermal time constant of the lightning arrester. An increase in the gas pressure in the sealed tank dependent on the thermal time constant, however, is a phenomenon that occurs both in a case where some of the nonlinear resistive elements are damaged and in a case where all the nonlinear resistive elements are damaged. It is therefore difficult to clearly determine whether some of the nonlinear resistive elements are damaged or all the nonlinear resistive elements are damaged. Because the case where some of the nonlinear resistive elements are damaged and the case where all of the nonlinear resistive elements are damaged differently affect the subsequent resistance of the lightning arrester, there are demands for detecting that some nonlinear resistive elements are damaged.

The present invention has been made in view of the above, and an object thereof is to provide a monitoring device capable of detecting damage on some of a plurality of nonlinear resistive elements included in a lightning arrester.

### Solution to Problem

To solve the above problem and achieve an object, there are provided monitoring devices and monitoring methods according to the independent claims.

### Advantageous Effects of Invention

The monitoring device according to the present invention produces an effect of allowing detection of damage on some of a plurality of nonlinear resistive elements included in a lightning arrester.

### Brief Description of Drawings

FIG. 1 is a diagram illustrating schematic configurations of a monitoring device and a lightning arrester monitored by the monitoring device according to a first embodiment of the present invention.
FIG. 2 is a graph illustrating an example of a change in gas pressure in an LA tank when the lightning arrester processes a lightning stroke.
FIG. 3 is a graph illustrating an example of a change in gas pressure in the LA tank in a case where some nonlinear resistive elements in an element group are damaged when the lightning arrester is struck by a lightning stroke.
FIG. 4 is a block diagram illustrating a hardware configuration of a determining unit.
FIG. 5 is a diagram illustrating schematic configurations of a monitoring device and a lightning arrester monitored by the monitoring device according to a second embodiment of the present invention.
FIG. 6 is a diagram illustrating schematic configurations of a monitoring device and a lightning arrester monitored by the monitoring device according to a third embodiment of the present invention.

### Description of Embodiments

A monitoring device and a monitoring method according to certain embodiments of the present invention will be described in detail below with reference to the drawings. Note that the present invention is not limited to the embodiments but is defined by the appended claims.

### First Embodiment.

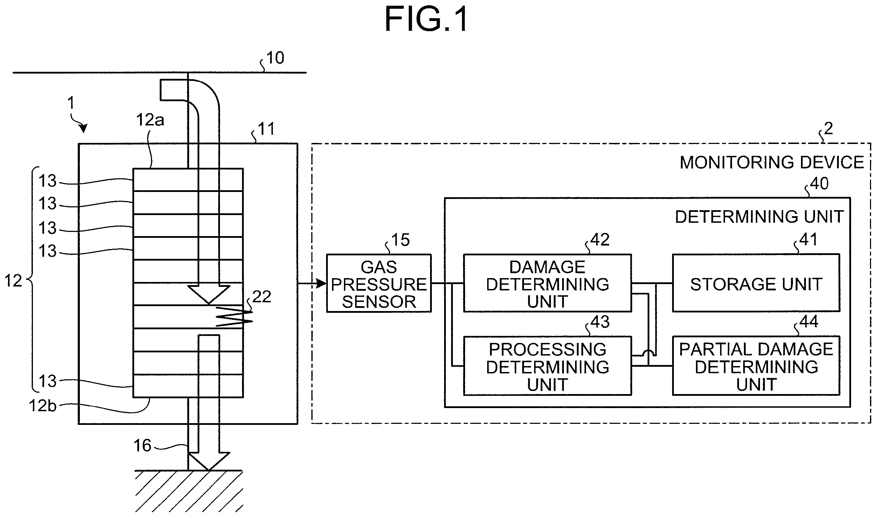

FIG. 1 is a diagram illustrating schematic configurations of a monitoring device and a lightning arrester monitored by the monitoring device according to a first embodiment of the present invention. A monitoring system includes the lightning arrester 1 and the monitoring device 2 illustrated in FIG. 1.

First, the lightning arrester (LA) 1 will be described. The lightning arrester 1 includes an LA tank 11 which is a sealed tank, and a plurality of nonlinear resistive elements 13 which are elements. The LA tank 11 is a sealed metal container. Insulating gas is encapsulated in the LA tank 11. An example of the insulating gas is sulfur hexafluoride (SF₆) gas.

The nonlinear resistive elements 13 are arranged in series in the LA tank 11. An example of the nonlinear resistive elements 13 is zinc oxide (ZnO) elements. While an example in which ten nonlinear resistive elements 13 are provided is illustrated in FIG. 1, the number of nonlinear resistive elements 13 can be changed as appropriate. In the description below, the arranged nonlinear resistive elements 13 will be collectively referred to as an element group 12.

A first end 12a of the element group 12 is connected with a high-voltage conductor 10. A second end 12b of the element group 12 is grounded with a grounding conductor 16. Note that the high-voltage conductor 10 is connected with a device, which is not illustrated, to which power is supplied via the high-voltage conductor 10. When the high-voltage conductor 10 is struck by lightning, the lightning arrester 1 prevents or reduces damage due to overvoltage or overcurrent, of devices connected with the high-voltage conductor 10 by discharging the overcurrent to the ground via the element group 12.

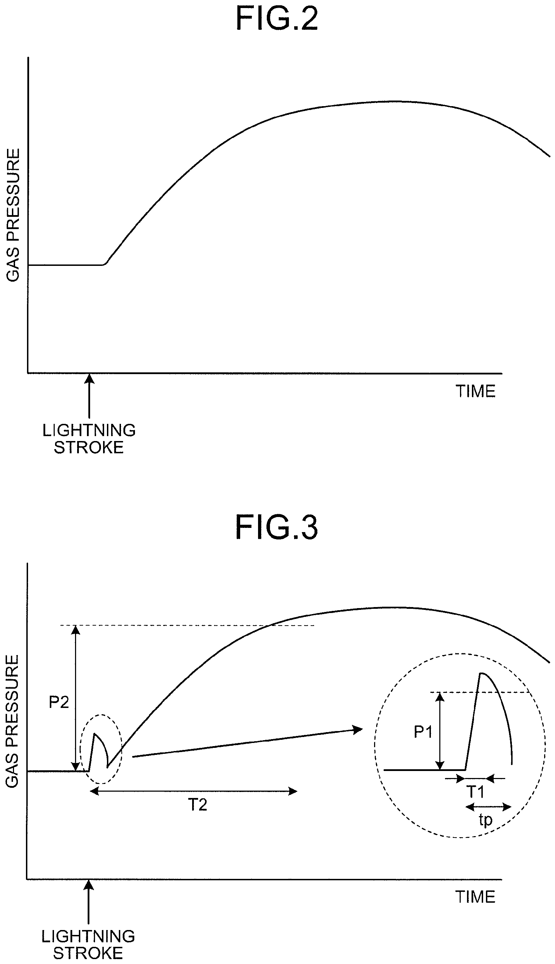

The change in gas pressure in the LA tank 11 that occurs when the lightning arrester 1 processes a lightning stroke will now be explained. FIG. 2 is a graph illustrating an example of the change in gas pressure in the LA tank 11 when the lightning arrester 1 processes a lightning stroke. When the lightning arrester 1 processes a lightning stroke, the nonlinear resistive elements 13 absorbing the energy of the lightning rise in temperature. The rise in the temperature of the nonlinear resistive elements 13 causes the temperature of the insulating gas in the LA tank 11 to rise. Because the LA tank 11 has a constant capacity, the rise in temperature of the insulating gas results in increasing the gas pressure in the LA tank 11, and the gas pressure in the LA tank 11 thereafter decreases with the decrease in temperature of the LA tank 11 and the gas due to heat dissipation to outside air, as illustrated in FIG. 2.

The change of gas pressure in the LA tank 11 during this process is a change dependent on the thermal time constant of the lightning arrester 1. The thermal time constant of the lightning arrester 1 is an index representing a temperature change specific to the lightning arrester 1 calculated from components included in the lightning arrester 1, which are the LA tank 11, the element group 12, and the insulating gas. Because the gas pressure in the LA tank 11 changes in response to the change in temperature of the insulating gas depending on the thermal time constant, the change in the gas pressure in the LA tank 11 is also dependent on the thermal time constant of the lightning arrester 1.

Next, the change in the gas pressure in the LA tank 11 in a case where some nonlinear resistive elements 13 in the element group 12 are damaged when the lightning arrester 1 is struck by a lightning stroke, will be explained. FIG. 3 is a graph illustrating an example of the change in the gas pressure in the LA tank 11 in a case where some nonlinear resistive elements 13 in the element group 12 are damaged when the lightning arrester 1 is struck by a lightning stroke.

When the lightning arrester 1 is struck by a lightning stroke and some of the nonlinear resistive elements 13 are damaged, an arc 22 is generated across the surfaces of the damaged nonlinear resistive elements 13. The generation of the arc 22 causes a shock wave, and increases the gas pressure in the LA tank 11. As illustrated in FIG. 3, the increase in the gas pressure due to the generation of the arc 22 is more rapid than the increase in the gas pressure dependent on the thermal time constant. The shock wave caused by the generation of the arc 22 repeats collision and reflection in the LA tank 11 and disappears thereafter, and the gas pressure in the LA tank 11 decreases. The decrease in the gas pressure in the LA tank 11 is also more rapid than the decrease in the gas pressure dependent on the thermal time constant. Note that the peak duration of the shock wave is equivalent to the time during which the lightning arrester 1 is being struck by a lightning stroke, which is about a hundred microseconds. In FIG. 3, the gas pressure increases and decreases from the strike of the lightning stroke to time tp.

Note that, even when some nonlinear resistive elements 13 of the element group 12 are damaged, the remaining nonlinear resistive elements 13 may remain sound. In this case, the lightning stroke by which the lightning arrester 1 was struck is processed by the remaining nonlinear resistive elements 13, and the gas pressure in the LA tank 11 thus changes depending on the thermal time constant following the change of gas pressure caused by the generation of the arc 22, as illustrated in FIG. 3. Specifically, the change of the gas pressure from when the lightning arrester 1 was struck by the lightning stroke to time tp is dominantly affected by the shock wave, and is then dominantly affected by the rise in temperature of the element group 12 after time tp.

Next, the monitoring device 2 that monitors damage on the nonlinear resistive elements 13 will be described. The description refers back to FIG. 1, in which the monitoring device 2 monitors whether or not the nonlinear resistive elements 13 included in the lightning arrester 1 are damaged by the lightning stroke. The monitoring device 2 includes a gas pressure sensor 15 which is a gas pressure detecting unit, and a determining unit 40. The gas pressure sensor 15 is a detecting unit that detects gas pressure in the LA tank 11, which is an internal state of the LA tank 11. The gas pressure sensor 15 sends information indicating the detected gas pressure to the determining unit 40.

The determining unit 40 includes a storage unit 41, a damage determining unit 42, a processing determining unit 43, and a partial damage determining unit 44. The storage unit 41 stores information indicating a first preset time T1, a threshold P1 that is a criterion for element damage, a second preset time T2, and a threshold P2 that is a criterion for processing of a lightning stroke.

The damage determining unit 42 samples the gas pressure in the LA tank 11 at preset intervals on the basis of the information sent from the gas pressure sensor 15. When the increase in the gas pressure in the LA tank 11 exceeds the threshold P1, which is the criterion for element damage, within the first preset time T1, the damage determining unit 42 determines that a nonlinear resistive element 13 is damaged by a lightning stroke. The first preset time T1 is set to a time shorter than the time tp. The threshold P1, which is a criterion for element damage, is a value of an increase in gas pressure calculated or verified under a condition that one nonlinear resistive element 13 is subjected to a preset energy and generates an arc 22 in the LA tank 11.

The processing determining unit 43 samples the gas pressure in the LA tank 11 at preset intervals on the basis of the information sent from the gas pressure sensor 15. When the value of the increase in the gas pressure in the LA tank 11 after a nonlinear resistive element 13 is determined to have been damaged by a lightning stroke until the second preset time T2 elapses exceeds the threshold P2, which is a criterion for lightning stroke processing, the processing determining unit 43 determines that the lightning arrester 1 has processed the lightning stroke with the sound nonlinear resistive elements 13. The threshold P2, which is the criterion for lightning stroke processing, is a value of an increase in gas pressure calculated on the basis of the thermal time constant of the lightning arrester 1 in a case where the element group 12 absorbs a preset energy.

When it is determined by the damage determining unit 42 that a nonlinear resistive element 13 is damaged and it is determined by the processing determining unit 43 that the lightning arrester 1 has processed the lightning stroke, the partial damage determining unit 44 determines that some nonlinear resistive elements 13 of the element group 12 are damaged. The partial damage determining unit 44 may send information indicating that some nonlinear resistive elements 13 are damaged to cause an informing unit or the like, which is not illustrated, to inform that some nonlinear resistive elements 13 are damaged. Examples of the informing unit include a display device that displays images and texts, and a speaker that generates audio. When it is determined that a nonlinear resistive element 13 is damaged but it is determined that the lightning arrester 1 has not processed the lightning stroke, the partial damage determining unit 44 determines that all or most of the nonlinear resistive elements 13 are damaged and the lightning stroke has not been processed properly. Alternatively, the determination that the lightning stroke has not been processed properly may be made by another device that is connected to the high-voltage conductor 10 and monitors a short circuit.

When all or most of the nonlinear resistive elements 13 included in the element group 12 are damaged, a short circuit condition occurs before all the energy of the lightning stroke is absorbed. Accordingly, the gas pressure in the LA tank 11 increases and decreases rapidly and does not exceed the threshold P2, which is the criterion for lightning stroke processing, until the second preset time T2 elapses. When no nonlinear resistive elements 13 are damaged by a lightning stroke, no arc 22 is generated, and no shock wave therefore occurs.

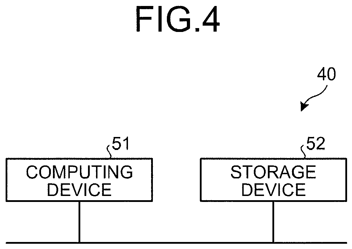

FIG. 4 is a block diagram illustrating a hardware configuration of the determining unit 40. The determining unit 40 includes a computing device 51 and a storage device 52. An example of the computing device 51 is a central processing unit (CPU). The functions of the damage determining unit 42, the processing determining unit 43, and the partial damage determining unit 44 described above are implemented by the computing device 51. Examples of the storage device 52 include a semiconductor memory, a magnetic disk, and an optical disk. The functions of the storage unit 41 described above are implemented by the storage device 52. In addition, programs for causing the computing device 51 to perform the aforementioned functions are stored in the storage device 52. The storage device 52 is also used as a primary storage area when the computing device 51 executes programs. Examples of the programs include software, firmware, or combination of software and firmware.

The monitoring device 2 described above enables detection of damage of some nonlinear resistive elements 13 in a manner clearly distinguished from damage of all or most of the nonlinear resistive elements 13.

### Second Embodiment.

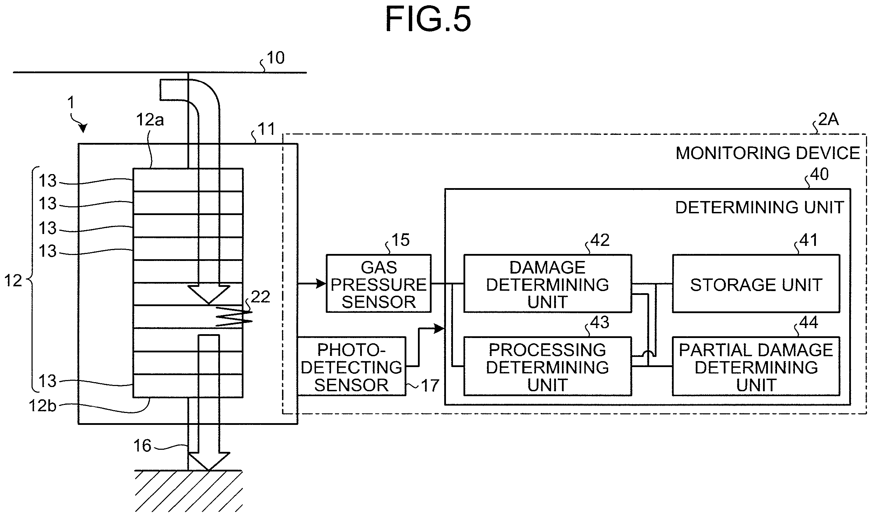

FIG. 5 is a diagram illustrating schematic configurations of a monitoring device and a lightning arrester monitored by the monitoring device according to a second embodiment of the present invention. Note that components similar to the components in the first embodiment described above will be represented by the same reference numerals, and detailed description thereof will not be repeated.

A monitoring device 2A according to the second embodiment includes a photodetecting sensor 17, which is a light detecting unit, in addition to the components of the monitoring device 2 described in the first embodiment. The photodetecting sensor 17 is a detecting unit that detects light emission in the LA tank 11, which is an internal state. When light emission in the LA tank 11 is detected, the photodetecting sensor 17 sends information indicating detection of light emission to the determining unit 40.

When light emission in the LA tank 11 is detected, the damage determining unit 42 determines that a nonlinear resistive element 13 is damaged. As described above, when a nonlinear resistive element 13 is damaged by a lightning stroke, an arc 22 is generated across the surface of the nonlinear resistive element 13. In the second embodiment, the generation of the arc 22 is detected using the light emission, and used for whether or not a nonlinear resistive element 13 is damaged. Note that criteria similar to those in the first embodiment are used for the determination that the lightning stroke has been processed and the determination that some nonlinear resistive elements 13 are damaged by the processing determining unit 43 and the partial damage determining unit 44.

The monitoring device 2A described above enables detection of damage of some nonlinear resistive elements 13 in a manner clearly distinguished from damage of all or most of the nonlinear resistive elements 13 by using the photodetecting sensor 17.

### Third Embodiment.

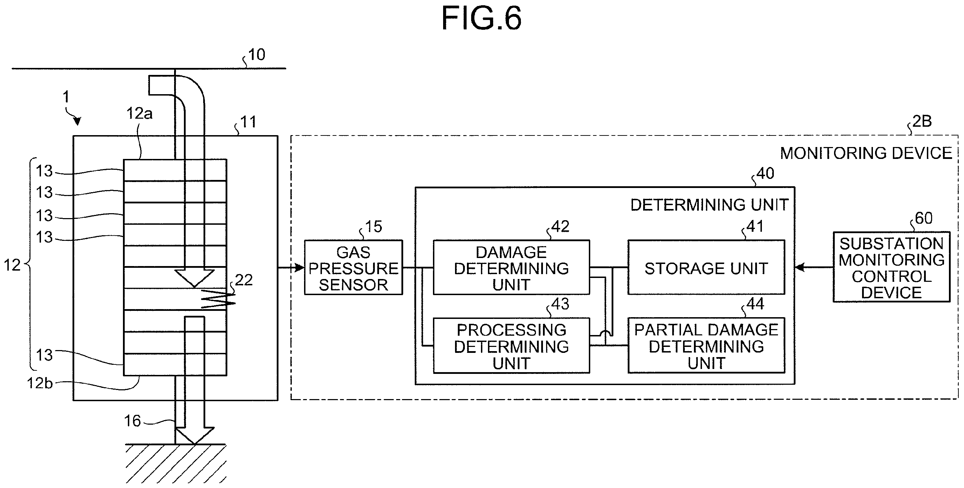

FIG. 6 is a diagram illustrating schematic configurations of a monitoring device and a lightning arrester monitored by the monitoring device according to a third embodiment of the present invention. Note that components similar to the components in the first or second embodiment described above will be represented by the same reference numerals, and detailed description thereof will not be repeated.

A monitoring device 2B according to the third embodiment is connected with a substation monitoring control device 60, which is a system protecting unit. The substation monitoring control device 60 monitors the current of a system to which the lightning arrester 1 is connected and the voltage of the system, cuts off power supply to the system in the case of a lightning stroke, and restores power supply to the system after the cutting off. The lightning arrester 1 and the high-voltage conductor 10 are included in the system of a substation monitored by the substation monitoring control device 60. The substation monitoring control device 60 always monitors the system current and the system voltage of the substation, and detects whether or not an operation to protect the system in the case of a lightning stroke is successful. In a typical substation, such a substation monitoring control device 60 is built and operated.

A case where the operation to protect the system is successful is a case where a power system has rapidly recovered after a lightning stroke. For the element group 12, this is a case where some nonlinear resistive elements 13 are damaged but the other nonlinear resistive elements 13 remain sound or a case where all the nonlinear resistive elements 13 are sound. For the element group 12, a case where the operation to protect the system has not been successful is a case where all the nonlinear resistive elements 13 are damaged by a lightning stroke or a case where most of the nonlinear resistive elements 13 are damaged, resulting in breakdown.

In the third embodiment, the processing determining unit 43 determines that a lightning stroke has been properly processed when the operation to protect the system in the case of a lightning stroke is determined to be successful by the substation monitoring control device 60. Note that the procedures for determining damage of a nonlinear resistive elements 13 by the damage determining unit 42 and determining damage of some nonlinear resistive elements 13 by the partial damage determining unit 44 are similar to the procedures in the first embodiment.

The monitoring device 2B described above enables detection of damage of some nonlinear resistive elements 13 in a manner clearly distinguished from damage of all or most of the nonlinear resistive elements 13 on the basis of the results of detection by the gas pressure sensor 15 and the result of determination by the substation monitoring control device 60.

Alternatively, the configuration may be such that the photodetecting sensor 17 is provided instead of the gas pressure sensor 15, and the damage determining unit 42 determines damage of a nonlinear resistive element 13 on the basis of light emission in the LA tank 11.

The configurations presented in the embodiments above are examples of the present invention, and can be combined with other known technologies or can be partly omitted or modified without departing from the scope of the present invention.

### Reference Signs List

1 lightning arrester; 2 monitoring device; 10 high-voltage conductor; 11 LA tank; 12 element group; 12a first end; 12b second end; 13 nonlinear resistive element; 15 gas pressure sensor; 17 photodetecting sensor; 40 determination unit; 41 storage unit; 42 damage determining unit; 43 processing determining unit; 44 partial damage determining unit; 51 computing device; 52 storage device; 60 substation monitoring control device.

## Claims

1. A monitoring device (2) configured to monitor a lightning arrester (1) including a plurality of elements (13) arranged in a sealed tank (11), the monitoring device (2) comprising:
a detecting unit to detect an internal state of the sealed tank (11);
a damage determining unit to determine damage of an element due to a lightning stroke on the basis of a detection result detected by the detecting unit; and
a processing determining unit (43) to determine whether or not the lightning stroke is processed after the element is determined to be damaged, wherein
the detecting unit is a gas pressure detecting unit (15) to detect gas pressure in the sealed tank (11), the gas pressure being the internal state,
**characterized in that** the monitoring device (2) further comprises a system protecting unit to monitor current and voltage of a system connected with the lightning arrester (1), cut off power supply to the system in a case of a lightning stroke, and restore power supply to the system after the cut off, wherein
when a value of an increase in the gas pressure in the sealed tank (11) within a preset time exceeds a threshold being a criterion for element damage, the damage determining unit determines that the element is damaged by a lightning stroke,
when the power supply to the system is restored by the system protecting unit, the processing determining unit (43) determines that the lightning stroke is processed, and
the monitoring device (2) further comprises:
a partial damage determining unit (44) to determine that some of the elements (13) are damaged when the element is determined to be damaged by the damage determining unit and the lightning stroke is determined to have been processed by the processing determining unit (43), and to determine that all or most of the elements (13) are damaged when the element is determined to be damaged by the damage determining unit and the lightning stroke is determined not to have been processed by the processing determining unit (43).

2. A monitoring device (2) configured to monitor a lightning arrester (1) including a plurality of elements (13) arranged in a sealed tank (11), the monitoring device (2) comprising:
a detecting unit to detect an internal state of the sealed tank (11);
a damage determining unit to determine damage of an element due to a lightning stroke on the basis of a detection result detected by the detecting unit; and
a processing determining unit (43) to determine whether or not the lightning stroke is processed after the element is determined to be damaged,
**characterized in that** the monitoring device (2) further comprises a system protecting unit to monitor current and voltage of a system connected with the lightning arrester (1), cut off power supply to the system in a case of a lightning stroke, and restore power supply to the system after the cut off, wherein
the detecting unit is a light detecting unit (17) to detect light emission in the sealed tank (11), the light emission being the internal state,
when light emission is detected in the sealed tank (11), the damage determining unit determines that the element is damaged by a lightning stroke, and
when the power supply to the system is restored by the system protecting unit, the processing determining unit (43) determines that the lightning stroke is processed, and
the monitoring device (2) further comprises:
a partial damage determining unit (44) to determine that some of the elements (13) are damaged when the element is determined to be damaged by the damage determining unit and the lightning stroke is determined to have been processed by the processing determining unit (43), and to determine that all or most of the elements (13) are damaged when the element is determined to be damaged by the damage determining unit and the lightning stroke is determined not to have been processed by the processing determining unit (43).

3. A monitoring method for monitoring a lightning arrester (1) including a plurality of elements (13) arranged in a sealed tank (11), the monitoring method comprising:
a step of detecting gas pressure in the sealed tank (11) ;
a step of determining that an element is damaged by a lightning stroke when a value of an increase in the gas pressure in the sealed tank (11) within a preset time exceeds a threshold being a criterion for element damage; and
a step of determining that the lightning stroke is processed when power supply to a system connected with the lightning arrester (1) is restored by a system protecting unit after the element is determined to be damaged, the system protecting unit monitoring current and voltage of the system, cutting off power supply to the system in a case of a lightning stroke, and restoring power supply to the system after the cut off; and
a step of determining that some of the elements (13) are damaged when the element is determined to be damaged and the lightning stroke is determined to have been processed, and determining that all or most of the elements (13) are damaged when the element is determined to be damaged and the lightning stroke is determined not to have been processed.

4. A monitoring method for monitoring a lightning arrester (1) including a plurality of elements (13) arranged in a sealed tank (11), the monitoring method comprising:
a step of detecting gas pressure in the sealed tank (11) ;
a step of detecting light emission in the sealed tank (11) ;
a step of determining that an element is damaged by a lightning stroke when light emission is detected in the sealed tank (11);
a step of determining that the lightning stroke is processed when power supply to a system connected with the lightning arrester (1) is restored by a system protecting unit after the element is determined to be damaged, the system protecting unit monitoring current and voltage of the system, cutting off power supply to the system in a case of a lightning stroke, and restoring power supply to the system after the cut off; and
a step of determining that some of the elements (13) are damaged when the element is determined to be damaged and the lightning stroke is determined to have been processed, and determining that all or most of the elements (13) are damaged when the element is determined to be damaged and the lightning stroke is determined not to have been processed.

## Patentansprüche

1. Überwachungsvorrichtung (2), die eingerichtet ist, einen Blitzableiter (1) zu überwachen, der eine Vielzahl von Elementen (13) umfasst, die in einem abgedichteten Tank (11) angeordnet sind, wobei die Überwachungsvorrichtung (2) aufweist:
eine Erfassungseinheit zum Erfassen eines inneren Zustands des abgedichteten Tanks (11);
eine Beschädigungsbestimmungseinheit zum Bestimmen einer Beschädigung eines Elements aufgrund eines Blitzschlags basierend auf einem Erfassungsergebnis, das durch die Erfassungseinheit erfasst wird; und
eine Verarbeitungsbestimmungseinheit (43) zum Bestimmen, ob der Blitzschlag verarbeitet ist oder nicht, nachdem das Element als beschädigt bestimmt ist, wobei
die Erfassungseinheit eine Gasdruckerfassungseinheit (15) zum Erfassen eines Gasdrucks in dem abgedichteten Tank (11) ist, wobei der Gasdruck der innere Zustand ist,
**dadurch gekennzeichnet, dass** die Überwachungsvorrichtung (2) ferner eine Systemschutzeinheit aufweist, um einen Strom und eine Spannung eines Systems, das mit dem Blitzableiter (1) verbunden ist, zu überwachen, um eine Leistungsversorgung des Systems in einem Fall eines Blitzschlags zu unterbrechen und um eine Leistungsversorgung für das System nach der Unterbrechung wiederherzustellen, wobei,
wenn ein Wert einer Erhöhung des Gasdrucks in dem abgedichteten Tank (11) innerhalb einer voreingestellten Zeit eine Schwelle übersteigt, die ein Kriterium für eine Elementbeschädigung ist, die Beschädigungsbestimmungseinheit bestimmt, dass das Element durch einen Blitzschlag beschädigt ist,
wenn die Leistungsversorgung für das System durch die Systemschutzeinheit wiederhergestellt wird, die Verarbeitungsbestimmungseinheit (43) bestimmt, dass der Blitzschlag verarbeitet ist, und
die Überwachungsvorrichtung (2) ferner aufweist:
eine Teilbeschädigungsbestimmungseinheit (44), um zu bestimmen, dass einige der Elemente (13) beschädigt sind, wenn das Element als beschädigt durch die Beschädigungsbestimmungseinheit bestimmt wird und wenn der Blitzschlag als durch die Verarbeitungsbestimmungseinheit (43) verarbeitet bestimmt wird, und um zu bestimmen, dass alle oder die meisten der Elemente (13) beschädigt sind, wenn das Element als beschädigt durch die Beschädigungsbestimmungseinheit bestimmt wird und wenn der Blitzschlag als nicht durch die Verarbeitungsbestimmungseinheit (43) verarbeitet bestimmt wird.

2. Überwachungsvorrichtung (2), die eingerichtet ist, einen Blitzableiter (1) zu überwachen, der eine Vielzahl von Elementen (13) umfasst, die in einem abgedichteten Tank (11) angeordnet sind, wobei die Überwachungsvorrichtung (2) aufweist:
eine Erfassungseinheit zum Erfassen eines inneren Zustands des abgedichteten Tanks (11);
eine Beschädigungsbestimmungseinheit zum Bestimmen einer Beschädigung eines Elements aufgrund eines Blitzschlags basierend auf einem Erfassungsergebnis, das durch die Erfassungseinheit erfasst wird; und
eine Verarbeitungsbestimmungseinheit (43) zum Bestimmen, ob der Blitzschlag verarbeitet ist oder nicht, nachdem das Element als beschädigt bestimmt wird,
**dadurch gekennzeichnet, dass** die Überwachungsvorrichtung (2) ferner eine Systemschutzeinheit aufweist, um einen Strom und eine Spannung eines Systems zu überwachen, das mit dem Blitzableiter (1) verbunden ist, um eine Leistungsversorgung für das System in einem Fall eines Blitzschlags zu unterbrechen und um eine Leistungsversorgung für das System nach der Unterbrechung wiederherzustellen, wobei
die Erfassungseinheit eine Lichterfassungseinheit (17) ist, um eine Lichtemission in dem abgedichteten Tank (11) zu erfassen, wobei die Lichtemission der interne Zustand ist,
wobei, wenn eine Lichtemission in dem abgedichteten Tank (11) erfasst wird, die Beschädigungsbestimmungseinheit bestimmt, dass das Element durch einen Blitzschlag beschädigt ist, und
wobei, wenn die Leistungsversorgung für das System durch die Systemschutzeinheit wiederhergestellt ist, die Verarbeitungsbestimmungseinheit (43) bestimmt, dass der Blitzschlag verarbeitet ist, und
wobei die Überwachungsvorrichtung (2) ferner aufweist:
eine Teilbeschädigungsbestimmungseinheit (44), um zu bestimmen, dass einige der Elemente (13) beschädigt sind, wenn das Element als beschädigt durch die Beschädigungsbestimmungseinheit bestimmt wird und wenn der Blitzschlag als durch die Verarbeitungsbestimmungseinheit (43) verarbeitet bestimmt wird, und um zu bestimmen, dass alle oder die meisten der Elemente (13) beschädigt sind, wenn das Element als beschädigt durch die Beschädigungsbestimmungseinheit bestimmt ist und wenn der Blitzschlag als nicht durch die Verarbeitungsbestimmungseinheit (43) verarbeitet bestimmt wird.

3. Überwachungsverfahren zum Überwachen eines Blitzableiters (1), der eine Vielzahl von Elementen (13) umfasst, die in einem abgedichteten Tank (11) angeordnet sind, wobei das Überwachungsverfahren aufweist:
einen Schritt eines Erfassens eines Gasdrucks in dem abgedichteten Tank (11);
einen Schritt eines Bestimmens, dass ein Element durch einen Blitzschlag beschädigt ist, wenn ein Wert einer Erhöhung des Gasdrucks in dem abgedichteten Tank (11) innerhalb einer voreingestellten Zeit eine Schwelle übersteigt, die ein Kriterium für eine Elementbeschädigung ist; und
einen Schritt eines Bestimmens, dass der Blitzschlag verarbeitet ist, wenn eine Leistungsversorgung für ein System, das mit dem Blitzableiter (1) verbunden ist, durch eine Systemschutzeinheit wiederhergestellt, nachdem das Element als beschädigt bestimmt ist, wobei die Systemschutzeinheit einen Strom und eine Spannung des Systems überwacht, eine Leistungsversorgung für das System in einem Fall eines Blitzschlags unterbricht und eine Leistungsversorgung für das System nach der Unterbrechung wiederherstellt; und
einen Schritt eines Bestimmens, dass einige der Elemente (13) beschädigt sind, wenn das Element als beschädigt bestimmt ist und wenn der Blitzschlag als nicht verarbeitet bestimmt ist, und eines Bestimmens, dass alle oder die meisten der Elemente (13) beschädigt sind, wenn das Element als beschädigt bestimmt ist und wenn der Blitzschlag als nicht verarbeitet bestimmt ist.

4. Überwachungsverfahren zum Überwachen eines Blitzableiters (1), der eine Vielzahl von Elementen (13) umfasst, die in einem abgedichteten Tank (11) angeordnet sind, wobei das Überwachungsverfahren aufweist:
einen Schritt eines Erfassens eines Gasdrucks in dem abgedichteten Tank (11);
einen Schritt eines Erfassens einer Lichtemission in dem abgedichteten Tank (11);
einen Schritt eines Bestimmens, dass ein Element durch einen Blitzschlag beschädigt ist, wenn eine Lichtemission in dem abgedichteten Tank (11) erfasst wird;
einen Schritt eines Bestimmens, dass der Blitzschlag verarbeitet ist, wenn eine Leistungsversorgung für ein System, das mit dem Blitzableiter (1) verbunden ist, durch eine Systemschutzeinheit wiederhergestellt ist, nachdem das Element als beschädigt bestimmt ist, wobei die Systemschutzeinheit einen Strom und eine Spannung des Systems überwacht, eine Leistungsversorgung für das System in einem Fall eines Blitzschlags unterbricht und eine Leistungsversorgung für das System nach der Unterbrechung wiederherstellt; und
einen Schritt eines Bestimmens, dass einige der Elemente (13) beschädigt sind, wenn das Element als beschädigt bestimmt wird und wenn der Blitzschlag als verarbeitet bestimmt wird, und eines Bestimmens, dass alle oder die meisten der Elemente (13) beschädigt sind, wenn das Element als beschädigt bestimmt ist und wenn der Blitzschlag als nicht verarbeitet bestimmt ist.

## Revendications

1. Dispositif de surveillance (2) configuré pour surveiller un parafoudre (1) comportant une pluralité d'éléments (13) agencés dans une cuve étanche (11), le dispositif de surveillance (2) comprenant :
une unité de détection pour détecter un état interne de la cuve étanche (11) ;
une unité de détermination d'endommagement pour déterminer un endommagement d'un élément causé par un coup de foudre sur la base d'un résultat de détection détecté par l'unité de détection ; et
une unité de détermination de traitement (43) pour déterminer si le coup de foudre a été ou non traité après qu'il a été déterminé que l'élément a été endommagé,
l'unité de détection étant une unité de détection de pression de gaz (15) pour détecter une pression de gaz dans la cuve étanche (11), la pression de gaz représentant l'état interne,
le dispositif de surveillance (2) étant **caractérisé en ce qu'**il comprend en outre une unité de protection de système pour surveiller un courant et une tension d'un système relié au parafoudre (1), couper l'alimentation électrique du système en présence d'un coup de foudre, et rétablir l'alimentation électrique du système après la coupure,
lorsqu'une valeur d'une augmentation de la pression de gaz dans la cuve étanche (11) dans un intervalle de temps prédéfini dépasse un seuil représentant un critère d'endommagement d'élément, l'unité de détermination d'endommagement déterminant que l'élément a été endommagé par un coup de foudre,
lorsque l'alimentation électrique du système est rétablie par l'unité de protection de système, l'unité de détermination de traitement (43) déterminant que le coup de foudre a été traité, et
le dispositif de surveillance (2) comprenant en outre :
une unité de détermination d'endommagement partiel (44) pour déterminer que certains des éléments (13) ont été endommagés lorsqu'il est déterminé, par l'unité de détermination d'endommagement, que l'élément a été endommagé et qu'il est déterminé, par l'unité de détermination de traitement (43), que le coup de foudre a été traité, et pour déterminer que la totalité ou la majorité des éléments (13) ont été endommagés lorsqu'il est déterminé, par l'unité de détermination d'endommagement, que l'élément a été endommagé et qu'il est déterminé, par l'unité de détermination de traitement (43), que le coup de foudre n'a pas été traité.

2. Dispositif de surveillance (2) configuré pour surveiller un parafoudre (1) comportant une pluralité d'éléments (13) agencés dans une cuve étanche (11), le dispositif de surveillance (2) comprenant :
une unité de détection pour détecter un état interne de la cuve étanche (11) ;
une unité de détermination d'endommagement pour déterminer un endommagement d'un élément causé par un coup de foudre sur la base d'un résultat de détection détecté par l'unité de détection ; et
une unité de détermination de traitement (43) pour déterminer si le coup de foudre a été ou non traité après qu'il a été déterminé que l'élément a été endommagé,
le dispositif de surveillance (2) étant **caractérisé en ce qu'**il comprend en outre une unité de protection de système pour surveiller un courant et une tension d'un système relié au parafoudre (1), couper l'alimentation électrique du système en présence d'un coup de foudre, et rétablir l'alimentation électrique du système après la coupure,
l'unité de détection étant une unité de détection de lumière (17) pour détecter une émission de lumière dans la cuve étanche (11), l'émission de lumière représentant l'état interne,
lorsqu'une émission de lumière est détectée dans la cuve étanche (11), l'unité de détermination d'endommagement déterminant que l'élément a été endommagé par un coup de foudre, et
lorsque l'alimentation électrique du système est rétablie par l'unité de protection de système, l'unité de détermination de traitement (43) déterminant que le coup de foudre a été traité, et
le dispositif de surveillance (2) comprenant en outre :
une unité de détermination d'endommagement partiel (44) pour déterminer que certains des éléments (13) ont été endommagés lorsqu'il est déterminé, par l'unité de détermination d'endommagement, que l'élément a été endommagé et qu'il est déterminé, par l'unité de détermination de traitement (43), que le coup de foudre a été traité, et pour déterminer que la totalité ou la majorité des éléments (13) ont été endommagés lorsqu'il est déterminé, par l'unité de détermination d'endommagement, que l'élément a été endommagé et qu'il est déterminé, par l'unité de détermination de traitement (43), que le coup de foudre n'a pas été traité.

3. Procédé de surveillance pour surveiller un parafoudre (1) comportant une pluralité d'éléments (13) agencés dans une cuve étanche (11), le procédé de surveillance comprenant :
une étape de détection d'une pression de gaz dans la cuve étanche (11) ;
une étape de détermination qu'un élément a été endommagé par un coup de foudre lorsqu'une valeur d'une augmentation de la pression de gaz dans la cuve étanche (11) dans un intervalle de temps prédéfini dépasse un seuil représentant un critère d'endommagement d'élément ; et
une étape de détermination que le coup de foudre a été traité lorsque l'alimentation électrique d'un système relié au parafoudre (1) est rétablie par une unité de protection de système après qu'il a été déterminé que l'élément a été endommagé, l'unité de protection de système surveillant un courant et une tension du système, coupant l'alimentation électrique du système en présence d'un coup de foudre, et rétablissant l'alimentation électrique du système après la coupure ; et
une étape de détermination que certains des éléments (13) ont été endommagés lorsqu'il est déterminé que l'élément a été endommagé et qu'il est déterminé que le coup de foudre a été traité, et de détermination que la totalité ou la majorité des éléments (13) ont été endommagés lorsqu'il est déterminé que l'élément a été endommagé et qu'il est déterminé que le coup de foudre n'a pas été traité.

4. Procédé de surveillance pour surveiller un parafoudre (1) comportant une pluralité d'éléments (13) agencés dans une cuve étanche (11), le procédé de surveillance comprenant :
une étape de détection d'une pression de gaz dans la cuve étanche (11) ;
une étape de détection d'une émission de lumière dans la cuve étanche (11) ;
une étape de détermination qu'un élément a été endommagé par un coup de foudre lorsqu'une émission de lumière est détectée dans la cuve étanche (11) ;
une étape de détermination que le coup de foudre a été traité lorsque l'alimentation électrique d'un système relié au parafoudre (1) est rétablie par une unité de protection de système après qu'il a été déterminé que l'élément a été endommagé, l'unité de protection de système surveillant un courant et une tension du système, coupant l'alimentation électrique du système en présence d'un coup de foudre, et rétablissant l'alimentation électrique du système après la coupure ; et
une étape de détermination que certains des éléments (13) ont été endommagés lorsqu'il est déterminé que l'élément a été endommagé et qu'il est déterminé que le coup de foudre a été traité, et de détermination que la totalité ou la majorité des éléments (13) ont été endommagés lorsqu'il est déterminé que l'élément a été endommagé et qu'il est déterminé que le coup de foudre n'a pas été traité.
